# EUROPEAN PATENT APPLICATION

(11) **EP 1 713 278 A2**
(43) Date of publication of application: **18.10.2006**
(21) Application number: 06252037.4
(22) Date of filing: 12.04.2006
(51) Int. Cl.: H04N 7/24

(54) **Method and apparatus for improved data analysis**

(30) Priority: 14.04.2005 US 907756
(71) Applicant: Vqual Limited, 1 Henbury Road Bristol BS9 3HQ (GB)
(72) Inventor: Bowers, Matthew Alan, Bath & North East Somerset BA2 1JN (GB)
(74) Representative: Wardle, Callum Tarn

(57) **Abstract**

A method of locating a specified portion of a digital data stream in each of a plurality of visual representations of the data stream, the method comprising: determining the value of a first data stream location unit corresponding to the specified portion of the digital data stream for a first one of the data stream visual representations, the first data stream location unit being specific to the first data stream visual representation; causing a first data processing entity associated with the first data stream visual representation to convert the first data stream location unit to a second data stream location unit; transmitting the second data stream location unit to each of a plurality of further data processing entities, each further data processing entity being associated with a further one of the plurality of visual representations; and causing, in response to receiving the second data stream location unit, each of the further data processing entities to convert the second data stream location unit to respective further data stream location units specific to the associated data stream visual representation, whereby each further data stream visual representation corresponds to the portion of the data stream specified in the first visual representation.

## Description

### Background to the Invention

Many consumer products now provide the facility to reproduce digitally encoded data, examples of such consumer products including personal stereos, mobile phone handsets, video conferencing facilities, digital and cable television and desktop computers. The digital data may be provided in the form of pre-recorded data retrieved from a storage medium, such as a CD or DVD or as data transmitted to the consumer device in real time, either wirelessly or via cable. Examples of real time transmission of digital data include the provision of a digital television service, digital radio and the wireless transmission of still pictures.

As will be appreciated by those skilled in the art, the amount of digital data required to record and/or transmit any given data item will vary depending upon a number of factors. However, for the stored or transmitted data to be reproduced some form of compression of the data is typically required to facilitate storage/transmission. In an effort to ensure a minimum standard of data transmission and data quality is provided to the consumer and to also try to ensure a minimum degree of interoperability between different manufacturers' equipment, a number of industry standards have been developed specifying the parameters to which the data compression must comply. Examples of such standards include H.264/AVC, MPEG-4, MPEG-2, H263+, H263 and H.261 for video compression and AAC and MP3 for audio.

Compliance to the standards and interoperability with other vendors' compression algorithms is recognised in the prior art as being difficult to test and debug. Comparing the performance of different data encoders and decoders (codecs) in accordance with the prior art is a time-consuming and imprecise art often involving non-analytical evaluation and comparison.

Consequently, the present applicant has developed an analytical tool that allows multiple aspects of the performance of a data codec to be analysed and quantitatively measured. Examples of such aspects, in the context of video data, include the overlaying of macroblock data as the video is played back, providing a macroblock summary in a tabular form, providing a schematic syntactic view of the data and providing a display of the actual compressed data in the form of hexadecimal, decimal, ASCII and binary. Whilst each of the analysis tools provided for each aspect of the codec performance provides valuable data, the performance data is presented in a number of different forms, ranging from the completely visual to the actual data bits provided by the codec. Consequently, it can be extremely difficult for an operator using the different analysis tools to determine which portions of the performance data presented within a particular analysis tool relates to the same part of the compressed data within one or more of the other analysis tools.

### Summary of the Invention

According to a first aspect of the present invention there is provided a method of locating a specified portion of a digital data stream in each of a plurality of visual representations of the data stream, the method comprising determining the value of a first data stream location unit corresponding to the specified portion of the digital data stream for a first one of the data stream visual representations, the first data stream location unit being specific to the first data stream visual representation, causing a first data processing entity associated with the first data stream visual representation to convert the first data stream location unit to a second data stream location unit, transmitting the second data stream location unit to each of a plurality of further data processing entities, each further data processing entity being associated with a further one of the plurality of visual representations and causing, in response to receiving the second data stream location unit, each of the further data processing entities to convert the second data stream location unit to respective further data stream location units specific to the associated data stream visual representation, whereby each further data stream visual representation corresponds to the portion of the data stream specified in the first visual representation.

The step of transmitting the second data stream location unit preferably comprises transmitting the second data stream location unit to a transmission hub and subsequently transmitting the second data stream location unit from the transmission hub to each of the further processing entities.

The digital data stream may comprise at least one parent stream and a plurality of sub-streams associated with the parent stream, in which case the second data stream location unit preferably includes a sub-stream identifier. The method may further comprise converting between a second data stream location unit relating to a parent stream and a corresponding second data stream location unit relating to an associated sub-stream. The second data stream location unit may additionally or alternatively include a bit identifier.

The first and further data stream location units preferably each relate to a different parameter of the digital data stream. The parameter may comprise any one of time, data value or data identity.

In preferred embodiments, the digital data stream comprises compressed video data and the parameter may therefore comprise any one of frame identity, slice identity, macroblock identity, block identity, pixel identity, bitstream address and bit number and other data.

According to a second aspect of the present invention there is provided a computer program comprising a plurality of computer readable instructions that, when executed by a computer, cause the computer to determine the value of a first data stream location unit corresponding to a specified portion of a digital data stream for a first one of a plurality of data stream visual representations, the first data stream location unit being specific to the first data stream visual representation, cause a first data processing entity associated with the first data stream visual representation to convert the first data stream location unit to a second data stream location unit, transmit the second data stream location unit to each of a plurality of further data processing entities, each further data processing entity being associated with a further one of the plurality of visual representations and cause, in response to receiving the second data stream location unit, each of the further data processing entities to convert the second data stream location unit to respective further data stream location units specific to the associated data stream visual representation, whereby each further data stream visual representation corresponds to the portion of the data stream specified in the first visual representation.

The computer program is preferably embodied on a program carrier, the program carrier comprising any one of a data storage medium, such as a CD or DVD, and transmissible electromagnetic medium, such as a download file.

According to a third aspect of the present invention there is provided apparatus for providing a plurality of visual representations of a specified portion of a digital data stream, the apparatus comprising a first display controller arranged to cause a first visual representation of at least a portion of the digital data stream to be displayed on a display device and to determine the value of a first data stream location unit corresponding to a specified part of the first visual representation, a plurality of further conversion processors each in communication with the first conversion processor and arranged to convert the second data location unit to respective further data location units, and a plurality of further display controllers, each in communication with a respective one of the further conversion processors, each arranged to cause a respective visual representation of the digital data stream corresponding to the specified part of the first visual representation.

A transmission hub may be provided, the transmission hub being arranged to receive a second data location unit from any one of the first and further conversion processors and to transmit the received second data location unit to each of the remaining first and further conversion processors.

### Brief Description of the Drawings

Embodiments of the present invention will now be described below by way of illustrative example only with reference to the accompanying figures of which:
Figures 1 to 5 schematically illustrate different visual presentations of a portion of a video data stream;
Figure 6 schematically illustrates the required conversion processes between different visual presentations according to the prior art;
Figure 7 schematically illustrates the required conversion processes between visual presentations according to an embodiment of the present invention;
Figure 8 schematically illustrates an embodiment of the present invention;
Figure 9 illustrates two visual representations of a portion of video data in accordance with an embodiment of the present invention, with the two views synchronised; and
Figures 10a - 10c schematically illustrate examples of multiple data streams and the relationship between locations therein according to embodiments of the present invention.

### Description of Embodiments of the Invention

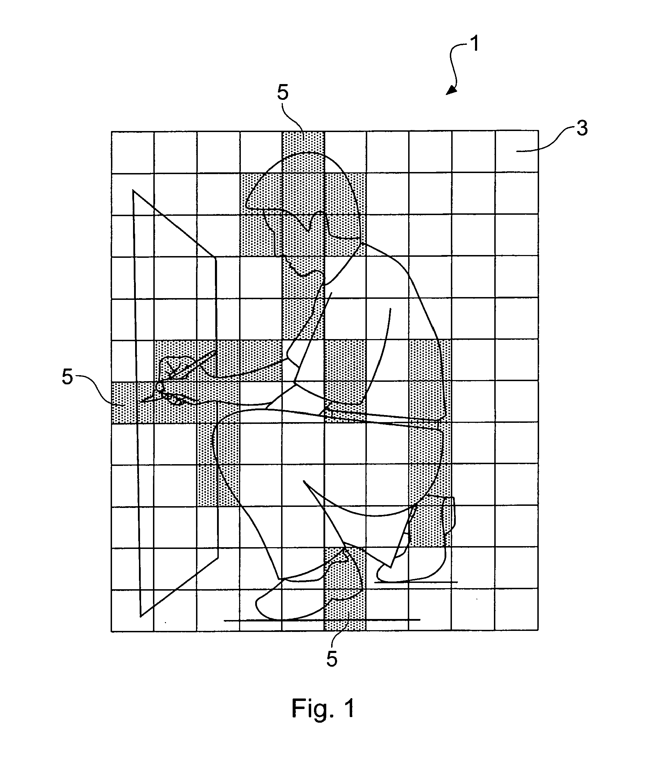

As previously mentioned, it is highly desirable to be able to analyse one or more characteristics of a set of digital data to evaluate the performance of one or more different codecs or different versions of a codec. The current applicants have substantially met this desire by providing a data analysis tool that performs such analysis of different characteristics of the input data. The results of the analysis are typically presented via a visual user interface using a different number of views. Examples of typical views are schematically illustrated in Figures 1 to 5 in respect of digital video data. However, it will be appreciated that while the following discussion relates specifically to digital video data the present invention is applicable to other digital data types, such as audio or other data types.

Figure 1 schematically illustrates a single frame 1 from a video that has been subdivided into separate macroblocks 3. Each macroblock comprises a 2 x 2 array of blocks, with each block comprising an 8 x 8 array of pixels. Data compression is typically performed on an individual macroblock basis. Individual macroblocks may be subsequently colour coded to represent one or more of the predominant characteristics shown by that macroblock for that particular video frame. For example, each macroblock may be shaded a particular colour in accordance with the particular type of coding applied to the pixels within that macroblock and this is schematically illustrated in Figure 1 by the shaded macroblocks 5. Examples of different coding techniques that may have been applied to individual macroblocks include forwards predictive, backwards predictive and intracoded.

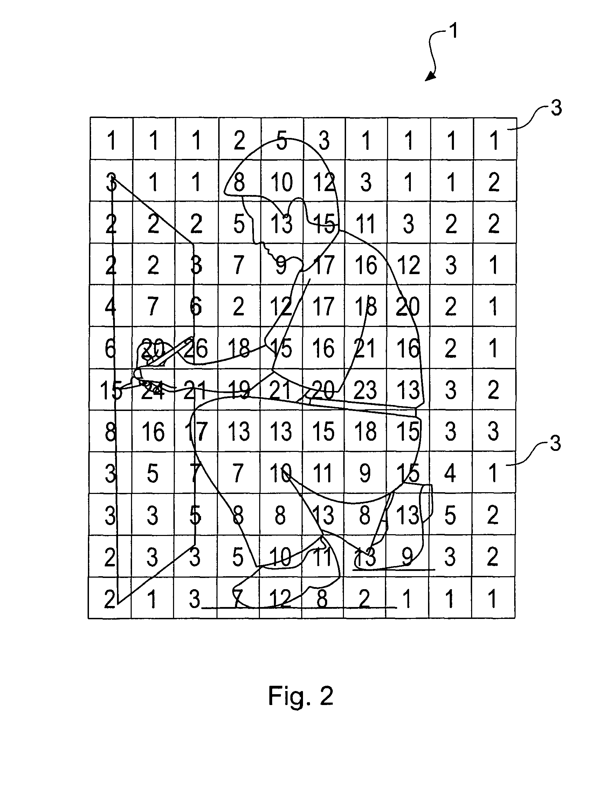

Figure 2 illustrates an alternative analysis view of the same video frame 1, in which numeric values are assigned to each macroblock 3. In the example shown in Figure 2, the greater the numeric value assigned to a macroblock, the greater the amount of motion that has occurred within that macroblock up to the particular point in time represented by the individual video frame. As will be appreciated, the representation shown in Figures 1 and 2 are schematic representations provided by way of example only and do not necessarily exactly conform to the view provided to a user of the analytical tool. However, both views have the common property of being essentially graphical in nature.

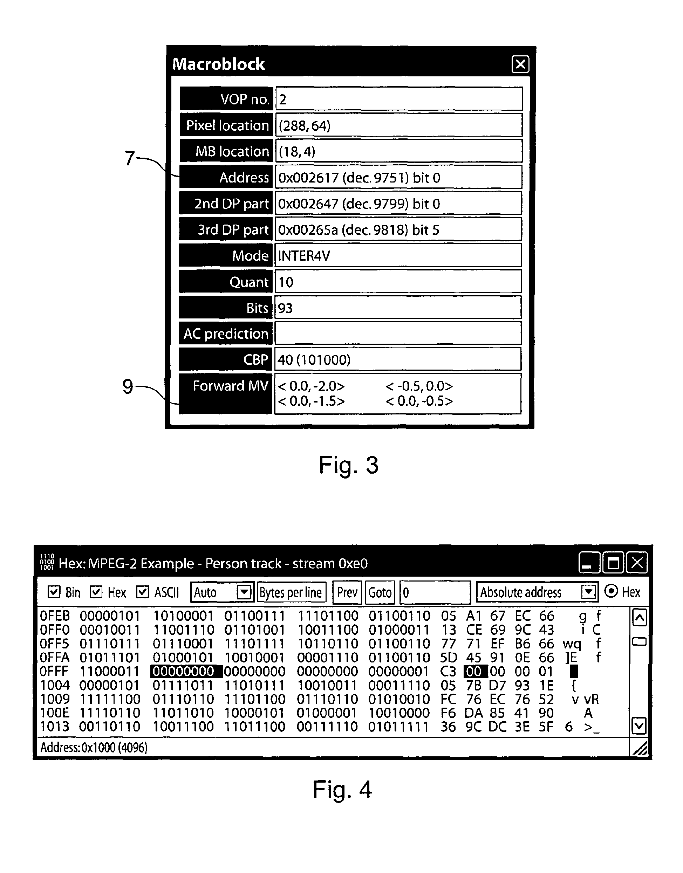

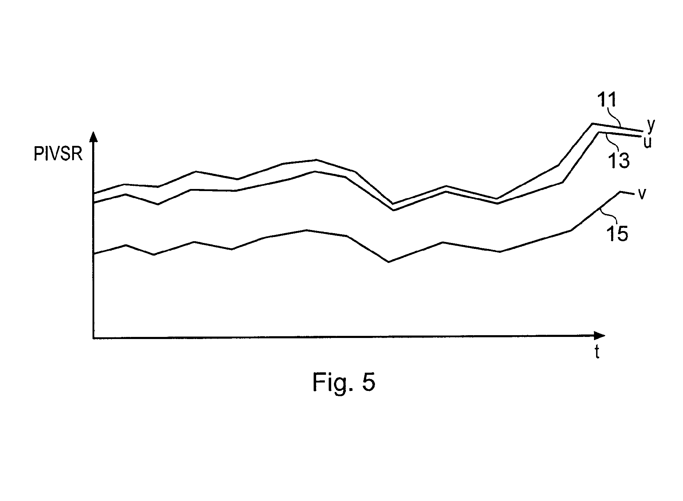

However, non-graphical views of the analysed video data may also be presented. Figure 3 illustrates a non-graphical presentation of various properties of a particular macroblock and is presented in a tabular form, with information such as the macroblock address 7 and details of the motion vectors 9 associated with the macroblock. Such a macroblock summary may be provided for each of the individual macroblocks 3 shown in Figures 1 and 2. A further example of the non-graphical display of the video data is shown in Figure 4, in which the individual bytes of data are displayed, in binary, hexadecimal and ASCII formats. This allows actual byte and bit values to be examined at any point within the video data stream. A further possible mode of display of the analysis results is shown in Figure 5, in which the signal to noise ratio is plotted as a graph against time for each of the Y, U and V planes of the display.

Whilst it is advantageous to be able to provide multiple analysis views as exemplified in Figures 1 to 5, it is also desired to be able to cross-reference between the different views, such that the selection of a particular macroblock 3, for example, from either of the views shown in Figures 1 and 2 automatically identifies the relevant bytes for display in the hexadecimal view illustrated in Figure 4. Equally, it would be advantageous to select a particular point in time from a display such as that illustrated in Figure 5 and to automatically identify either the appropriate video frame or frames and their macroblock information or display the relevant hexadecimal information for that point in the video stream.

However, the different views tend to be characterised by the use of different indexing units. For example, the view shown in Figure 5 is indexed as a function of time, i.e. the identification of a particular point within the view is identified as a particular elapsed time of the video stream, whereas the hexadecimal view illustrated in Figure 4 utilises the addresses of individual bytes within the data stream to select the correct byte or set of bytes for display. Consequently, to provide the desired cross referencing function between different views requires the conversion between different indexing units.

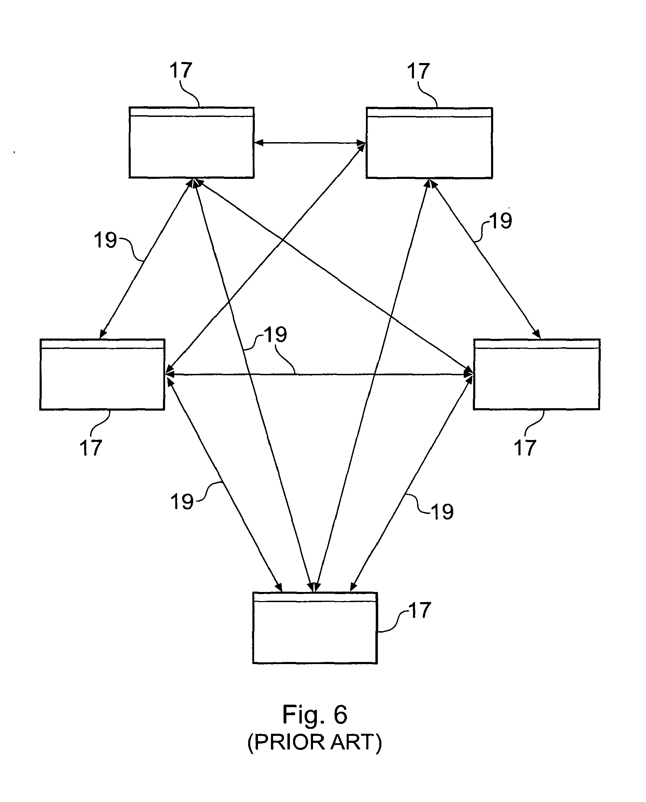

The number of conversions between different indexing units can be prohibitive. A simple scheme is schematically illustrated in Figure 6, in which five separate views 17 are represented, each view having a different indexing unit. In accordance with prior art techniques, individual conversion processes, represented by the double headed arrows 19, are provided for each conversion between the different views. For the five views shown, this requires a total of 20 separate conversion processes. This relationship generalises to n²-n conversion processes, where n represents the number of different indexing units. It will be appreciated that as the number of views and associated indexing units increases, the presence of the n² term results in the number of conversion processes required increasing in a non-linear fashion, to the extent that the number of conversion processes required for higher numbers of n becomes prohibitive.

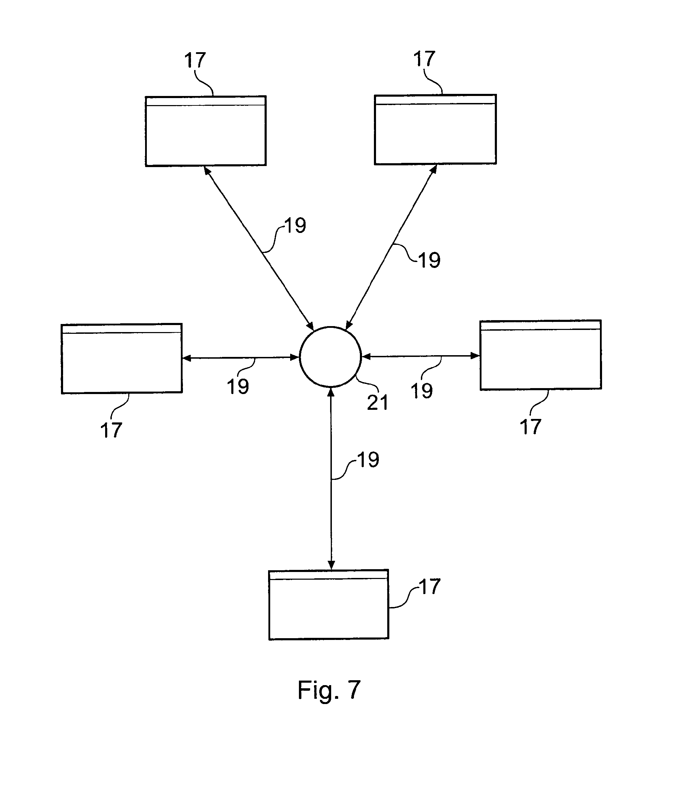

A method of reducing the number of required conversion processes according to an embodiment of the present invention is schematically illustrated in Figure 7. As previously with Figure 6, five different views 17 are provided, each using a different indexing unit. However, an intermediate, or hub, unit 21 is provided. In accordance with the present invention, any conversion between different index units and their respective views occurs by first converting the index unit to the intermediate unit 21, referred to hereinafter as the universal stream locator (USL). The USL is then converted to the required "destination" index unit. Consequently, for each view, or index unit only the pair of conversion processes to convert the index unit to and from the universal stream locator is required, such that the number of conversion processes, represented by the double headed arrows 19 is reduced to n, where n is the number of different index units or views.

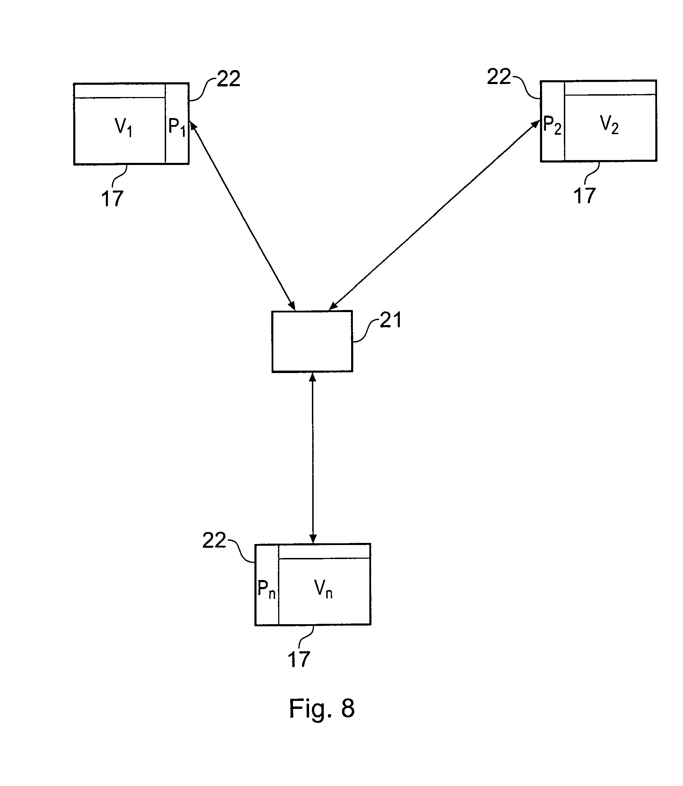

In a preferred embodiment, schematically illustrated in Figure 8, each view 17 has an associated data processing entity 22 unit for that view and the USL, and vice versa. According to the preferred implementation each data processing entity 22 may be physically discrete units or may be implemented by the appropriate control of a single data processing entity. In further implementations, the conversion processes may be accomplished by retrieving an appropriate conversion algorithm from a library of stored algorithms for execution by a data processing unit. The purpose of the hub 21 is to forward the USL's received from individual views to each of the remaining views. Consequently any appropriate implementation may be used for the hub. In alternative embodiments the USL's may be transmitted directly to each of the remaining views, thus dispensing with the hub. Each view thus provides a respective visual presentation of the same particular location in the input data stream as each of the other views and as specified by the current USL. Each view preferably has an associated display controller, which may be integrated with the corresponding data conversion processing entity, that generates the appropriate signals to cause the respective view to be displayed on an associated display device. In use, a user is thus able to select a particular point in the visual presentation of the input stream currently being viewed e.g. select a particular frame, and each other active view will display the corresponding data in accordance with each view type.

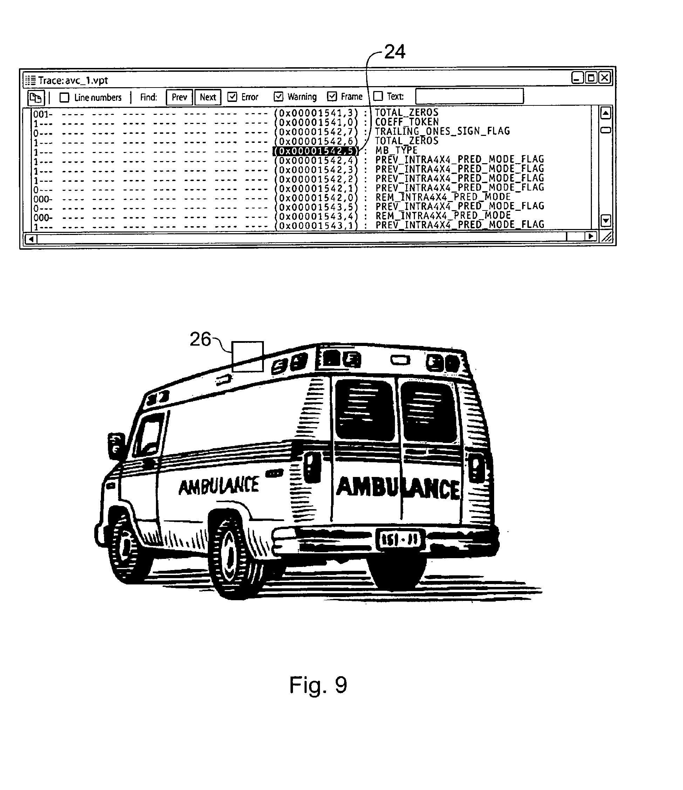

Two views of the same portion of video data generated in accordance with the present invention are shown in Figure 9. The first, upper, view provides information on the syntax of the provided video data, such as the type of encoding used for that particular portion of data. A particular segment of data 24 is illustrated as being highlighted. The second, lower, view illustrates a single frame with the same portion of video data as is shown in the upper view. The particular macroblock 26 that corresponds (i.e. includes) the data segment highlighted in the syntax trace view above is outlined. Whether the user highlights a data segment in the upper view or selects a particular area of the picture in the lower view, in embodiments of the present invention the corresponding segment of data will always be identified in the other active views.

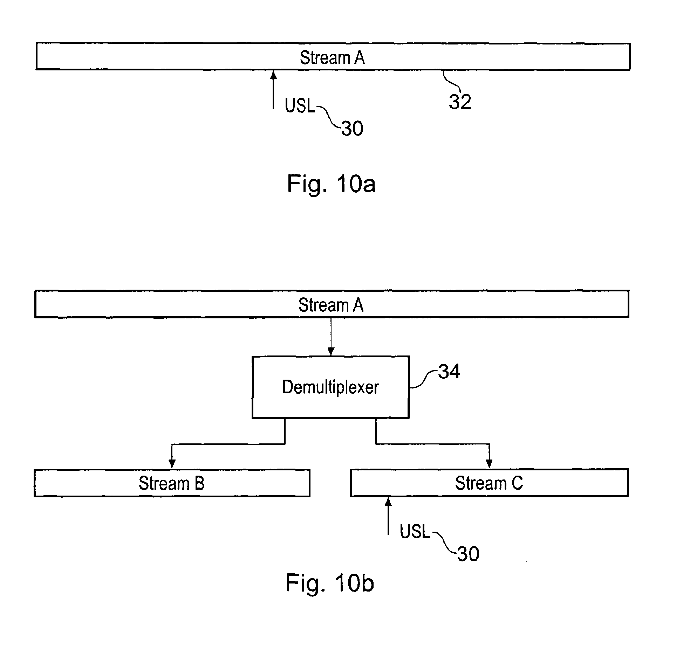

The Universal Stream Locator (USL) is a unit that represents the location of a particular data bit in one of a set of related data streams. The USL is made up of two parts: a stream identifier and a bit address. The stream identifier specifies a particular data stream that is included in a set of one or more related streams. The bit address is the location within the specified stream of a particular data bit. Figure 10a shows the simplest case of a single data stream 32, in which the USL 30 represents a bit address in the single stream 32.

Figure 10b shows a more complex case where the USL 30 specifies the bit address within one particular data stream of a set of streams. The set of data streams are hierarchically related and comprise a parent stream, stream A, such as a container stream (for example, a media file on disk), a child stream B, or sub-stream, derived from the parent (for example, the video channel of the media file) and a further child stream C, or sub-stream (for example, the audio channel of the media file). A demultiplexer 34 is used to extract the sub-streams from the parent stream. The USL 30 shown refers to a position in Stream C alone.

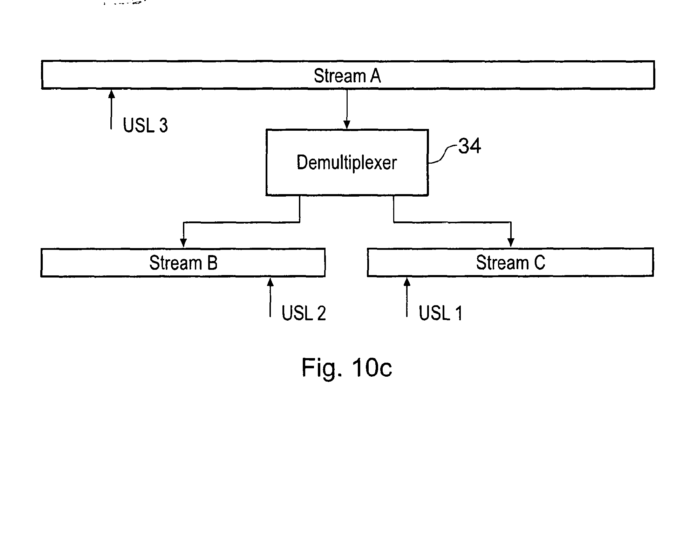

In Figure 10c the same set of three streams is indicated as for Figure 10b. However, three different USLs are indicated, one in each of three related streams. Since the data in Stream C has been separated from Stream A via the demuliplexer 34, every bit address in Stream C will also be present in the parent stream, Stream A. There is thus a one-to-one mapping between locations in Stream C and locations in Stream A. In other words, for every location in Stream C, there is an equivalent location in Stream A that represents the source of the derived data. In Figure 10c, USL 3 and USL 1 are equivalent locations since the bit at USL 1 was derived from the bit at USL 3 by the demultiplexer.

The demultiplexer may also implement the processes of converting the USL from a parent stream to a child stream and vice versa. These two processes are termed downstream mapping and upstream mapping. Downstream mapping is the method for converting a USL from its input (parent) to an output (child) stream. Upstream mapping is the method for converting a USL from an output (child) stream to its input (parent) stream. For example, upstream mapping converts USL 1 to USL 3. More complex mappings can be achieved in multiple steps. For example, to find the location in Stream B that is equivalent to USL 1 requires performing an upstream mapping to convert USL 1 to USL 3 followed by a downstream mapping to convert USL 3 to USL 2. It is to be noted that the relationship between USL 1 and USL 2 is that they were both derived from the same region of the parent Stream A. The application of mapping between different USLs is to allow cross-referencing between different streams involved in the analysis. For example, "where does this macroblock appear in the parent stream?".

## Claims

1. A method of locating a specified portion of a digital data stream in each of a plurality of visual representations of the data stream, the method comprising:
determining the value of a first data stream location unit corresponding to the specified portion of the digital data stream for a first one of the data stream visual representations, the first data stream location unit being specific to the first data stream visual representation;
causing a first data processing entity associated with the first data stream visual representation to convert the first data stream location unit to a second data stream location unit;
transmitting the second data stream location unit to each of a plurality of further data processing entities, each further data processing entity being associated with a further one of the plurality of visual representations; and
causing, in response to receiving the second data stream location unit, each of the further data processing entities to convert the second data stream location unit to respective further data stream location units specific to the associated data stream visual representation, whereby each further data stream visual representation corresponds to the portion of the data stream specified in the first visual representation.

2. The method of claim 1, wherein the step of transmitting the second data stream location unit comprises transmitting the second data stream location unit to a transmission hub and subsequently transmitting the second data stream location unit from the transmission hub to each of the further processing entities.

3. The method of claim 1, wherein the digital data stream comprises at least one parent stream and a plurality of sub-streams associated with the parent stream and wherein the second data stream location unit includes a sub-stream identifier.

4. The method of claim 3, wherein the method further comprises converting between a second data stream location unit relating to a parent stream and a corresponding second data stream location unit relating to an associated sub-stream.

5. The method of claim 1, wherein the second data stream location unit includes a bit identifier.

6. The method of claim 1, wherein the first and further data stream location units each relate to a different parameter of the digital data stream.

7. The method of claim 6, wherein the parameter comprises any one of time, data value or data identity.

8. The method of claim 6, wherein the digital data stream comprises compressed video data and the parameter comprises any one of frame identity, slice identify, macroblock identity, block identity and pixel identity.

9. A computer program comprising a plurality of computer readable instructions that, when executed by a computer, cause the computer to perform the method of claim 1.

10. A computer program according to claim 9, wherein the computer program is embodied on a program carrier, the program carrier comprising any one of a data storage medium and transmissible electromagnetic medium.

11. Apparatus for providing a plurality of visual representations of a specified portion of a digital data stream, the apparatus comprising:
a first display controller arranged to cause a first visual representation of at least a portion of the digital data stream to be displayed on a display device and to determine the value of a first data stream location unit corresponding to a specified part of the first visual representation;
a plurality of further conversion processors each in communication with the first conversion processor and arranged to convert the second data location unit to respective further data location units; and
a plurality of further display controllers, each in communication with a respective one of the further conversion processors, each arranged to cause a respective visual representation of the digital data stream corresponding to the specified part of the first visual representation.

12. The apparatus of claim 11, wherein a transmission hub is provided, the transmission hub being arranged to receive a second data location unit from any one of the first and further conversion processors and to transmit the received second data location unit to each of the remaining first and further conversion processors.
